# EUROPÄISCHE PATENTSCHRIFT

(11) **EP 0 551 244 B1**
(45) Veröffentlichungstag und Bekanntmachung des Hinweises auf die Patenterteilung: **16.04.1997**
(21) Anmeldenummer: 93810001.3
(22) Anmeldetag: 05.01.1993
(51) Int. Cl.: B65B 13/32, B29C 65/08

(54) **Breitbandbinden von gestapeltem Packgut**
Binding a stack of articles with a broad strip
Liage de marchandises empilées au moyen d'une bande large

(30) Priorität: 09.01.1992 CH 40/92
(43) Veröffentlichungstag der Anmeldung: 14.07.1993
(73) Patentinhaber: ATS AUTOMATIC TAPING SYSTEMS AG, 6300 Zug (CH)
(72) Erfinder: Baumann, Kurt, CH-5612 Villmergen (CH)
(74) Vertreter: Patentanwälte Breiter + Wiedmer AG

(56) Entgegenhaltungen:
- EP-A- 0 178 457
- EP-A- 0 242 480
- EP-A- 0 269 476
- WO-A-90/08028
- DE-A- 3 929 710
- DE-A- 3 934 560
- FR-A- 2 165 789
- LU-A- 79 160

## Beschreibung

Die Erfindung bezieht sich auf ein Verfahren zum Breitbandbinden von gestapeltem Packgut auf einer Banderoliermaschine mit wenigstens einer eine spannbare Schlaufe bildenden Banderole aus einer wenigstens einseitig beschichteten, porösen Papierbahn, welche Schlaufe nach dem Anziehen und Verbinden der Banderole abgetrennt wird, wobei die Banderoliermaschine bei der Schlaufenbildung die beiden Enden der Banderole aufeinander führt und das freie Ende mit der Banderole verbindet. Weiter betrifft die Erfindung eine Banderoliermaschine mit einer Sonotrode zum Breitbandbinden von gestapeltem Packgut mit wenigstens einer spannbaren Banderole aus Kunststoff oder aus einer mit einem Kunststoff oder einem Lack wenigstens einseitig beschichteten Papierbahn.

Aus der DE-A-3934560 ist eine einer Breitbandmaschine auf den ersten Blick ähnliche, bei vertiefter Betrachtung jedoch sofort als unterschiedlich erkannte Umreifungsmaschine bekannt. Diese schnürt mit schmalen, mechanisch ausserordentlich reissfesten und stabilen Bändern Pakete und andere Packstücke, welche sicher transportiert werden müssen. Die schmalen Bänder, in der Regel aus verstärktem Kunststoff, werden miteinander verschweisst. Umreifungsmaschinen gemäss der DE,A1 3934560 entsprechen im wesentlichen Umschnürungsmaschinen, sie erfüllen eine weitgehend gleiche Funktion, die Sicherung von zu transportierenden Packstücken und/oder von deren Umhüllung. Diese Gattungsgleichheit besteht auch, wenn Schnüre in der Regel verknotet und Schmalbänder verschweisst werden.

Die EP A 0242480 offenbart eine Vorrichtung zum Verschliessen von Behältern mit einer Sonotrode, welche eine dichte Schweissverbindung von zwei Kunststoffschichten erzeugt. Die Arbeitsfläche der Sonotrode hat einen regelmässigen Raster erzeugende Vertiefungen. Dies erleichtert das Verschweissen der Kunststoffbehälter. Die EP-A-0242480 enthält keinen Hinweis auf das Breitbandbinden, schon gar nicht mit Banderolen aus Papier mit wenigstens einer dünnen Kunststoffbeschichtung.

Eine Banderoliermaschine dagegen bindet keine Pakete für Transportzwecke und dgl., sondern quadratische, rechteckige, runde oder trapezförmige Stapel zu Lagerzwecken, indem sie diese mit wenigstens einem breiten Band umschlingt, bei mehreren Bändern gleichzeitig oder nacheinander. Das Packgut kann hart oder auch sehr weich ausgebildet sein. So können beispielsweise Drucksachen, Garnituren, Couverts, Etiketten, Banknoten, Checks, Visitenkarten, Bücher, Broschüren, Zeitungen, Hefte, Schilder, aber auch Pharmaprodukte, Textilien, Strümpfe, Gemüseprodukte, Käseschachteln, Fleischpackungen, Schuhsohlen oder dgl. stapelweise gebunden werden.

Eine Banderoliermaschine arbeitet halb- oder vollautomatisch. Eine Banderole aus Papier, beschichtetem Papier oder Kunststoff bildet eine Schlaufe, in welche der zu bindende Stapel, das Packgut, eingeführt wird. Durch einen Sensor gesteuert oder mit einem Hand- oder Fussschalter ausgelöst, wird die an ihrem freien Ende festgeklemmte Banderole zurückgezogen, bis es am Packgut satt anliegt. Weiche Stapel können von Hand mehr oder weniger zusammengedrückt werden. Dann wird das festgeklemmte Ende mit dem angezogenen Band verklebt oder verschweisst und abgeschnitten.

Im Informationsbulletin Nr. 1 vom Juni 1991 stellt die Firma Tanner & Co., CH-5615 Fahrwangen, eine Banderoliermaschine vor, welche Folien aus Kunststoff durch Ultraschall-Kaltverschweissen verbindet. Dieses Verfahren erlaubt einen sauberen Verschluss, bewirkt keinen Folienabbrand, hinterlässt keine Ablagerung auf dem Schweiss-System, hat keine Aufwärmzeit, ist kantenschonend, erfordert einen deutlich geringeren Materialaufwand, erzeugt weniger Abfall und erlaubt Kosteneinsparungen.

Durch diese Ultraschall-Verschweissung lassen sich auch schwere stapelbare Produkte problemlos, beliebig stark und trotzdem kantenschonend, umfassen. Die schnelle Ultraschall-Kaltverschweissung verhindert Wartezeiten und erlaubt eine hohe Produktivität. Die Banderoliermaschine wird nach dem erwähnten Informationsbulletin in zwei Ausführungsvarianten angeboten:
- Die Loop-Version mit offenem Bogen eignet sich vor allem für kleinere Produkte, welche auch nach oben entfernt werden müssen.
- Die Ausführungsform mit Bogen ist insbesondere für Hochleistungsbetriebe und/oder Vollautomatisierung geeignet. Auch eine Banderoliermaschine nach der EP-A-0456604 kann für die Ultraschall-Kaltverschweissung eingesetzt werden.

Die Erfinder haben sich die Aufgabe gestellt, ein Verfahren und eine Vorrichtung der eingangs genannten Art zu schaffen, welche das Breitbandbinden bei einfacher und sicherer Arbeitsweise noch rationeller und vielgestaltiger werden lässt.

In bezug auf das Verfahren wird die Aufgabe erfindungsgemäss nach dem Kennzeichen von Patentanspruch 1 gelöst. Spezielle und weiterbildende Ausführungsformen der Erfindung sind Gegenstand von abhängigen Patentansprüchen.

Das erfindungsgemässe Verfahren erlaubt die Verwendung von Banderolen jeder Breite aus vorzugsweise porösem Papier, welche wenigstens einseitig mit einem Kunststoff oder einem Lack beschichtet sind. Im folgenden wird einfachheitshalber nur noch von Kunststoffschichten gesprochen, organische und anorganische Lackschichten sollen dadurch immer mitumfasst sein.

Die Schlaufenbildung kann mit allen Arten von Banderoliermaschinen, z.B. der Loop-Version oder der Ausführungsform mit Bogen, durchgeführt werden. Obwohl, für sich betrachtet, sowohl die Verwendung von beschichtetem Papier als auch das Ultraschall-Kaltverschweissen von reinen Kunststoffolien bekannt sind, wurde die erfindungsgemässe Lösung bisher nicht in Betracht gezogen, insbesondere weil das direkte Verschweissen einer Kunststoffschicht mit Papier nicht möglich schien. So sind auch zahlreiche Vorversuche der Erfinder gescheitert.

Bevorzugt ist das für die Banderole verwendete Papier nicht nur porös, sondern eine freie, die Auflage für das Ende bildende Oberfläche auch aufgerauht.

Insbesondere bei der Verwendung eines einseitig beschichteten Papiers ist die Verwendung eines porösen, saugfähigen Papiers wesentlich, dessen Oberfläche erlaubt, eine einwandfreie und sichere Verbindung mit der einseitigen Kunststoffbeschichtung des freien Endes der Banderole mittels Ultraschall-Kaltverschweissung herzustellen.

Die Ultraschall-Schwingungen werden zweckmässig elektrisch generiert, vorzugsweise in einem Frequenzbereich von 30 - 50 kHz, insbesondere bei etwa 40 kHz. Für die Erzeugung der Schwingungen sind alle bekannten Sonotroden geeignet. Die Oberfläche der Sonotroden ist bevorzugt wie nachstehend beschrieben ausgebildet, sie kann jedoch auch eine ebene Fläche sein oder jede andere bekannte Struktur haben.

Hotmelts, welche dem Fachmann bekannt und auf dem Markt erhältlich sind, werden neben Thermoplasten, wie Polyäthylen und Polypropylen, bevorzugt als Beschichtungsmaterial eingesetzt. Diese stellen in technischer, ökonomischer und ökologischer Hinsicht eine optimale Lösung dar.

Der Kunststoff wird in an sich bekannter Weise auf das Papierband aufgetragen, beispielsweise durch Aufsprühen, Aufextrudieren oder Aufwalzen, oder als Folie aufgeklebt. Weiter kann der Kunststoff als Dispersion aufgebracht werden.

In an sich bekannter Weise kann im Bereich der Ultraschall-Kaltverschweissung ein Aufreissverschluss angeordnet sein, z.B. durch entsprechende Anordnung der Schweissstelle, wobei das freie Ende der Banderole zum Ergreifen und Aufreissen frei bleibt.

In bezug auf die Vorrichtung wird die Aufgabe erfindungsgemäss nach dem Kennzeichen von Patentanspruch 6 gelöst. Spezielle und weiterbildende Ausführungsformen sind Gegenstand von abhängigen Patentansprüchen.

Von der ebenen Arbeitsfläche bleiben nach der Ausbildung von Vertiefungen zweckmässig höchstens 80%, insbesondere 20 - 50 % übrig.

Vorzugsweise ist die ebene Arbeitsfläche der Sonotrode durch zahlreiche Vertiefungen in Teilbereiche aufgeteilt. Die übrigbleibenden Teile der Arbeitsfläche werden im folgenden auch Rasterflächen genannt.

Die Vertiefungen zwischen den Rasterpunkten verengen sich vorzugsweise in von der Arbeitsfläche wegweisender Richtung und bilden ein kommunizierendes Kanalsystem.

In Versuchsreihen haben erfindungsgemässe Vertiefungen, welche als in zwei Richtungen verlaufende Nuten ausgebildet sind, in Längsrichtung der Arbeitsfläche und in einem Winkel von 30 - 60° zur Längsseite der Arbeitsfläche, besonders gute Resultate ergeben, insbesondere, wenn sich die schrägen Seitenflächen der Nuten in einem Winkel von 30 - 90° schneiden.

Als optimale Tiefe für die Längs- und Quernuten hat sich 0,5 - 1 mm ergeben, wobei die Nuten zweckmässig einen Abstand im Bereich von 1 - 3 mm haben.

Die erfindungsgemässe Ausbildung der Arbeitsoberfläche der Sonotrode hat auch im Falle des bekannten Ultraschall-Kaltverschweissens von Banderolen aus Kunststoff eine erstaunliche Verbesserung ergeben. Beim erfindungsgemässen Verfahren mit einer kunststoffbeschichteten Banderole aus Papier kann die Ausbildung der Arbeitsoberfläche der Sonotrode eine massgebende Rolle spielen. Die Qualität der Verbindung kann direkt von der Gestaltung der Arbeitsoberfläche der Sonotrode abhängig sein.

Der Einsatz einer erfindungsgemässen Sonotrode führt in Kombination mit dem erfindungsgemässen Verfahren mit allen Arten von Banderoliermaschinen, sowohl der Loop-Version als auch der Ausführungsform mit Bogen, zu besonders vorteilhaften Resultaten. Alle mit Folien aus Kunststoff erreichten Vorteile des Ultraschall-Kaltverschweissens werden in allen üblichen Bandbreiten auch mit kunststoffbeschichteten Banderolen aus Papier erreicht, mit einer Maschine ohne Aufwärmzeit, die ohne Folienabbrand oder Ablagerungen auf dem Schweissystem zu einem sauberen Verschluss führt und zusammen mit einem geringeren, weniger Abfall erzeugenden Materialaufwand unabhängig vom Typ der Banderoliermaschine deutliche Kosteneinsparungen erlaubt.

Die Erfindung wird anhand von in der Zeichnung dargestellten Ausführungsbeispielen, welche auch Gegenstand von abhängigen Patentansprüchen sind, näher erläutert. Es zeigen schematisch:
- - Fig. 1: eine aufgeschnittene Prinzipskizze einer Banderoliermaschine mit einer angeflanschten Bandführung,
- - Fig. 2a: einen Schnitt durch eine am Ort der späteren Ultraschall-Kaltverschweissung aufeinandergelegte, einseitig beschichtete Banderole,
- - Fig. 2b: einen Schnitt gemäss Fig. 2a durch eine beidseitig beschichtete Banderole,
- - Fig. 3: eine Ansicht eines Sonotrodenschlittens mit Schneideeinheit einer Banderoliermaschine,
- - Fig. 4: eine Draufsicht auf die Arbeitsfläche einer Sonotrode,
- - Fig. 5: eine teilweise detailierte Ansicht einer Sonotrode im Bereich der Arbeitsfläche,
- - Fig. 6: eine Seitenansicht einer Sonotrode im Bereich der Arbeitsfläche, und
- - Fig. 7-9: eine auf das Verfahren gerichtete Variante gemäss Fig. 4-6.

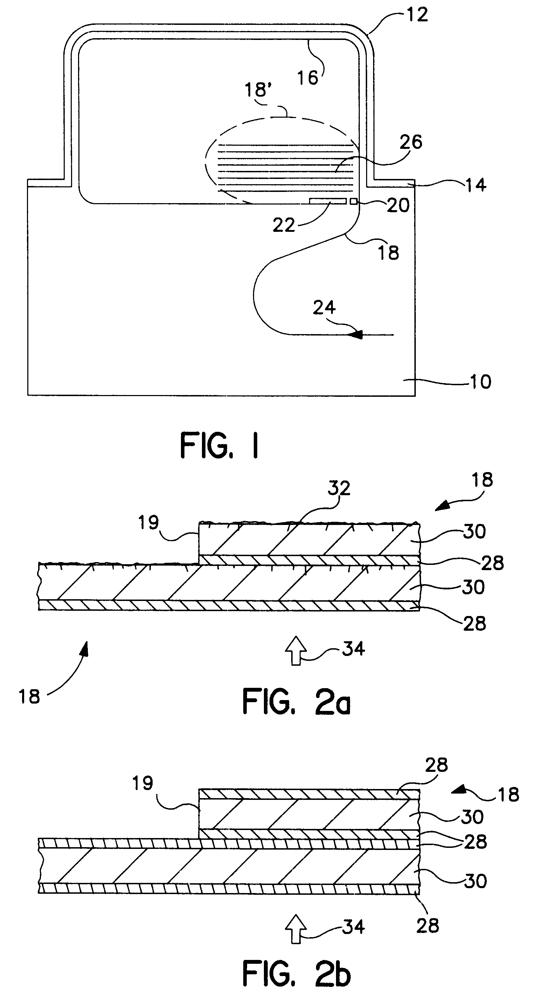

Auf einer in Fig. 1 dargestellten Banderoliermaschine 10, auch kurz Bandiermaschine genannt, ist mittels Flanschen 14 eine Bandführung 12 mit innenliegender Gleitfläche 16 angeordnet. Vorerst wird eine kleine Schlaufe der Banderole 18 gebildet, welche mit einem hier nicht gezeichneten Vorschub-Mechanismus zu einer grossen Schlaufe aufgestossen wird. Die gestrichelte Linie 18' zeigt die sich aufweitende Schlaufe in einem Zwischenstadium, selbstverständlich ist dann das gezeichnete Packgut noch nicht eingelegt. Die ausgezogen dargestellte Banderole 18 zeigt das Endstadium der Schlaufenbildung, das Packgut 26 wird in diesem Stadium eingelegt.

Von den in der Banderoliermaschine 10 angeordneten, an sich bekannten Einrichtungen, wie Einzugsrollen, gegenläufige Spannrollen, Bandbreiteneinstellung, Bandklemmen, Niederhalter und Messer ist der Einfachheit und der Übersichtlichkeit wegen lediglich eine Schweissplatte 22 zum Verbinden des vorgeschobenen freien Endes der Banderole mit der zurückgezogenen Banderole 18 selbst gezeigt. Der Vorschub wird durch die Einklemmzeit der Banderole 18 zwischen den mit konstanter Geschwindigkeit drehenden Einzugsrollen bestimmt. Der Rückzug wird ausgelöst, nachdem ein Sensor 20 das Einlegen von Packgut 26 anzeigt, und erfolgt durch Festklemmen der Banderole 18 zwischen den Spannrollen, in Gegenrichtung des Pfeils 24. Nach dem Rückzug mit regulierbarer Zugkraft umschliesst die Banderole 18 den eingelegten Stapel, das Packgut 26, satt. Selbstverständlich kann anstelle der Sensorsteuerung auch eine manuelle Steuerung erfolgen.

Fig. 2a zeigt eine vorgestossene, einseitig beschichtete Banderole 18 mit dem freien Ende 19, welches auf die den Anfang der Schlaufe bildende Banderole 18 gelegt ist.

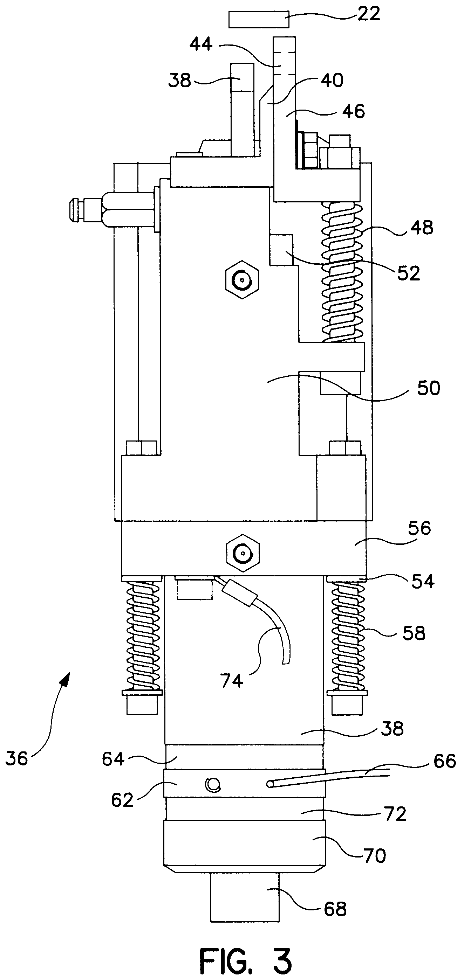

Die Banderole 18 besteht aus einer mit Kunststoff oder Lack 28, im vorliegenden Fall mit einem Hotmelt, beschichteten Papierbahn 30. Die freie Oberfläche 32 des Papiers 30 ist porös und rauh ausgebildet. Die Sonotrode 38 (Fig. 3) wirkt in Richtung des Pfeils 34 auf die Banderole 18 ein.

Fig. 2b zeigt eine vorgestossene, zweiseitig beschichtete Banderole 18. Beim freien Ende 19 sind zwei Beschichtungen 28 aus Kunststoff oder Lack aufeinandergelegt. Die Einwirkung der Sonotrode 38 erfolgt ebenfalls in Richtung des Pfeils 34.

Ein in Fig. 3 dargestellter Sonotrodenschlitten mit Schneideeinheit 36 ist Halterung und Antrieb sowohl für eine Sonotrode 38 als auch für ein Messer 40.

Die von der Sonotrode 38 erzeugten Ultraschallwellen werden von einem Gegendruckschieber, wie die Schweissplatte 22 hier bezeichnet wird, reflektiert.

Die Banderole 18 (Fig. 1) wird durch eine gestrichelt angedeutete Öffnung 44 in einem Klemmenmesserwinkel 46 geführt. Zwei in bezug auf die Blickrichtung hintereinander angeordnete, geführte Druckfedern 48 werden beim Verschieben des Klemmenmesserwinkels 46 gespannt.

Eine Sonotrodenhalterung 50 umfasst eine obere und eine untere Sonotrodenführung 52, 54. Auf einem Sonotrodenklemmring 56 wirken zwei diagonal gegenüberliegend angeordnete, geführte Druckfedern 58 ein.

Zwischen dem zylinderförmigen Teil der Sonotrode 38 und deren Elektrode 62 ist ein isolierender Keramikring 64 angeordnet. Ein Sonotrodenanschlusskabel 66 zum positiven Pol ist an der Elektrode 62 angeschlossen.

Ein zum negativen Pol führende Sonotrodenanschlusskabel 74 ist am Sonotroden-Klemmring 56 angeschlossen.

Mit einer Zylinderschraube 68 ist ein Sonotrodenring 70 gegen eine weitere, ebenfalls an der Elektrode 62 anliegende Keramikscheibe 72 gedrückt.

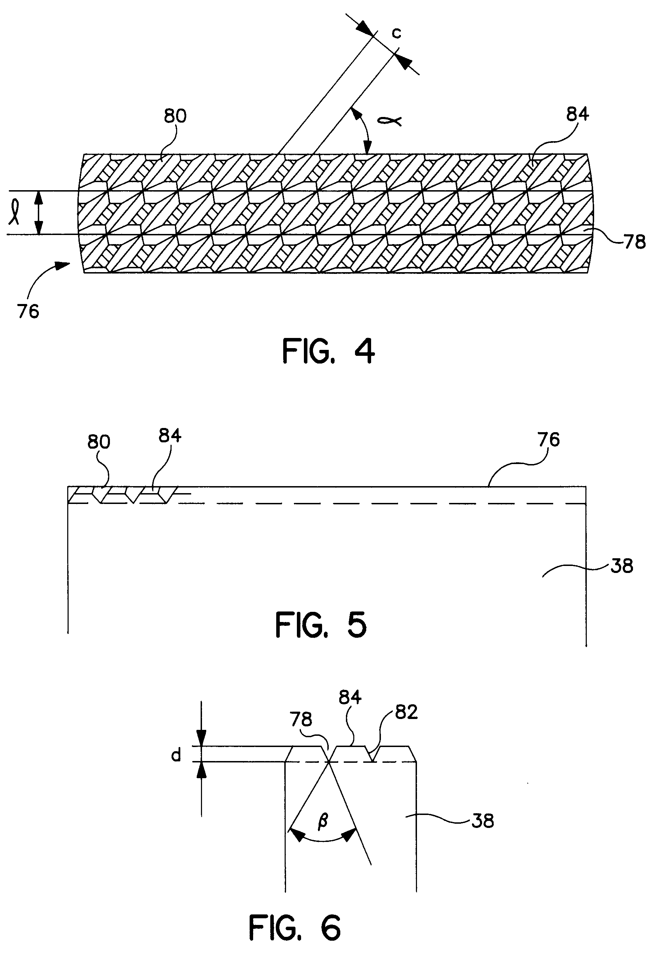

Eine in Fig. 4 dargestellte ebene Arbeitsfläche 76 einer Sonotrode 38 umfasst zwei Längsnuten 78 und zahlreiche Quernuten 80. Längs- und Quernuten bilden einen Winkel α von etwa 50°. Die Längsnuten 78 haben einen Abstand l von 2 mm, die Quernuten 80 einen Abstand c von etwa 1,25 mm.

Längs- und Quernuten 78, 80 haben, in Fig. 5 und 6 besser ersichtlich, im wesentlichen einen dreieckförmigen Querschnitt, die sich verengenden Seitenflächen 82 bilden einen Winkel β von etwa 60°. Die Nutentiefe d liegt bei etwa 0,75 mm.

Durch die Ausbildung von Längs- und Quernuten 78, 80 verbleiben von der Arbeitsfläche 76 der Sonotrode 38 zahlreiche durch eine Schraffur hervorgehobene Rasterflächen 84, welche parallelogrammförmig ausgebildet sind.

Die in Fig. 4 gezeigte Arbeitsfläche 76 ist in Wirklichkeit etwa 25 x 5 mm gross, es sind also zahlreiche kleine Rasterflächen 84 ausgebildet. Für den Erfolg der erfindungsgemässen Vorrichtung ist dies von wesentlicher Bedeutung.

Sonotroden 38 gemäss Fig. 4-6 eignen sich besonders gut als sogenannte Kombi-Sonotroden. Ohne Wechseln der Sonotrode 38 können Banderolen 18 aus Kunststoff, geschäumtem Kunststoff oder mit Hotmelt bzw. Folie beschichtetem Papier miteinander verschweisst werden.

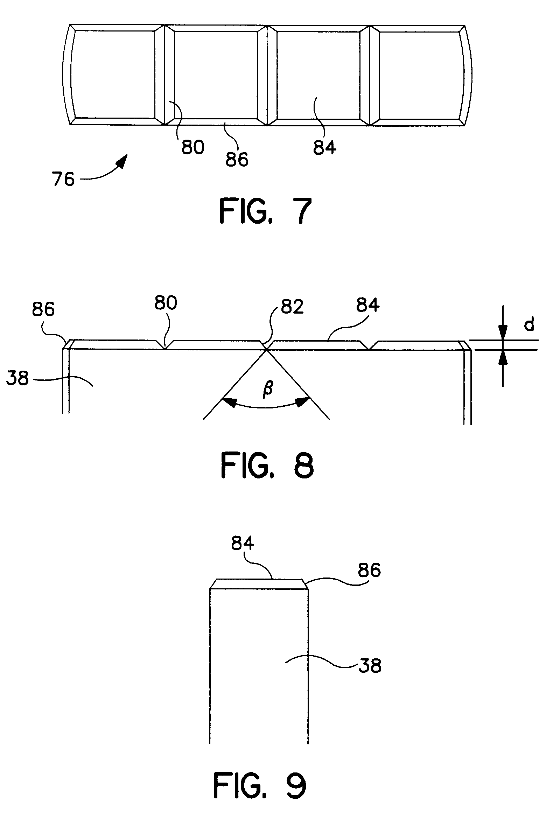

Eine Variante einer Sonotrode 38 ist in den Fig. 7-9 dargestellt. Aus Fig. 7 ist ersichtlich, dass die Arbeitsfläche 76 mit drei Quernuten 80 in vier etwa quadratische Teilbereiche, Rasterflächen 84 genannt, unterteilt ist. Die Quernuten 80 sind querschnittlich dreieckförmig ausgebildet, mit einem Winkel β von etwa 90° (Fig. 8). Die Nutenform und die Nutentiefe d entsprechen etwa derjenigen von Fig. 6.

Die Arbeitsfläche hat umlaufende Abschrägungen 86.

Die Sonotrode 38 gemäss den Fig. 7-9 erfordert einen stärkeren Generator als die bevorzugte Ausführungsform gemäss den Fig. 4-6. Durch Vermehren der Quernuten 80 und/oder die Ausbildung von Längsnuten 78 (Fig. 4) werden die Rasterflächen 84 immer kleiner, sie sind im Grenzfall nahezu linien- oder punktförmig.

## Patentansprüche

1. Verfahren zum Breitbandbinden von gestapeltem Packgut (26) auf einer Banderoliermaschine (10) mit wenigstens einer eine spannbare Schlaufe bildenden Banderole (18) aus einer wenigstens einseitig beschichteten, porösen Papierbahn (30), welche Schlaufe nach dem Anziehen und Verbinden der Banderole (18) abgetrennt wird, wobei die Banderoliermaschine (10) bei der Schlaufenbildung die beiden Enden der Banderole (18) aufeinander führt und das freie Ende mit der Banderole (18) mittels einer Sonotrode verbindet,
dadurch gekennzeichnet, dass
als Banderole (18) eine wenigstens einseitig mit einer 10 - 20 µm dicken Kunststoff- oder Lackschicht (28) beschichtete Papierbahn (30) dient, und eine ebene, durch Vertiefungen (78,80) in Rasterflächen (84) aufgeteilte Arbeitsfläche (76) der Sonotrode (38) eingesetzt wird.

2. Verfahren nach Anspruch 1, dadurch gekennzeichnet, dass eine Sonotrode (38) der Banderoliermaschine (10) mit einer Frequenz von 30 - 50 kHz, vorzugsweise etwa 40 kHz, arbeitet.

3. Verfahren nach Anspruch 1 oder 2, dadurch gekennzeichnet, dass eine einseitig beschichtete Banderole (18) mit aufgerauhter freier Papieroberfläche (32) eingesetzt wird.

4. Verfahren nach einem der Ansprüche 1 bis 3, dadurch gekennzeichnet, dass eine Banderole (18) mit ein- oder beidseitiger Kunststoffschicht (28) aus einem Hotmelt oder aus einem Thermoplasten, vorzugsweise aus Polyäthylen oder Polypropylen, eingesetzt wird.

5. Verfahren nach einem der Ansprüche 1 bis 4, dadurch gekennzeichnet, dass eine Banderole (18) mit wenigstens einer aufgesprühten, wenigstens einer als Dispersionsschicht aufgetragenen oder als Folie aufgelegten Kunststoffschicht (28) eingesetzt wird.

6. Banderoliermaschine (10) mit einer Sonotrode (38) zum Breitbandbinden von gestapeltem Packgut (26) mit wenigstens einer spannbaren Banderole (18) aus Kunststoff oder aus einer mit einem Kunststoff oder einem Lack (28) wenigstens einseitig beschichteten Papierbahn (30),
dadurch gekennzeichnet, dass
die ebene Arbeitsfläche (76) der Sonotrode (38) durch Vertiefungen (78,80) in Rasterflächen (84) aufgeteilt ist, wobei die Vertiefungen als in zwei Richtungen verlaufende Nuten (78, 80) ausgebildet sind, welche in Richtung der Längsseiten der Arbeitsfläche (76) und in einem Winkel (α) von 30 - 60° zu dieser Richtung verlaufen.

7. Maschine nach Anspruch 6, dadurch gekennzeichnet, dass sich die Nuten (78,80) in von der Arbeitsfläche (76) wegweisender Richtung verengen.

8. Maschine nach Anspruch 6 oder 7, dadurch gekennzeichnet, dass sich die schrägen Seitenflächen (82) in einem Winkel (β) von 30 - 90° schneiden.

9. Maschine nach einem der Ansprüche 6 bis 8, dadurch gekennzeichnet, dass die vorzugsweise 0,5 - 1 mm tiefen Längs- (78) und Quernuten (80), welche einen Abstand (l, c) von 1 - 3 mm haben, in einem Winkel (α) von vorzugsweise etwa 50° ausgebildet sind.

10. Maschine nach einem der Ansprüche 6 bis 9, dadurch gekennzeichnet, dass die Längsnuten (78) einen Abstand (l) von etwa 2 mm, die Quernuten (80) einen Abstand (c) von etwa 1,25 mm, die Nuten (78, 80) eine Tiefe (d) von etwa 0,75 mm haben, und die Nutenseitenflächen (82) sich in einem Winkel (β) von etwa 60° schneiden.

## Claims

1. Process for broad band binding of stacked packed products (26) on a banding machine (10) with at least one band (18) forming a tensionable loop of a porous paper web (30) coated on at least one side, where the said loop is severed after tightening and joining the band (18), where the banding machine (10) guides the two ends of the band (18) on to each other when forming the loop and joins the free end to the band (18) by means of a sonotrode,
characterised in that
the band (18) consists of a paper web (30) coated on at least one side by means of a plastic or lacquer coating (28) 10 to 20 µm thick, and a flat working surface (76) of the sonotrode (38) divided by recesses (78, 80) into grid surfaces (84) is used.

2. Process according to claim 1, characterised in that a sonotrode (38) of the banding machine (10) works at a frequency of 30 - 50 kHz, preferably around 40 kHz.

3. Process according to claim 1 or 2, characterised in that a band (18) coated on one side and with a roughened free paper surface (32) is used.

4. Process according to any of claims 1 to 3, characterised in that a band (18) with a plastic coating (28) on one or both sides of a hot melt or a thermoplastic, preferably polyethylene or polypropylene, is used.

5. Process according to any of Claims 1 to 4, characterised in that a band (18) is used with at least one plastic coating (28) which is sprayed on, applied as a dispersion layer, or laid on as a sheet.

6. Banding machine (10) with a sonotrode (38) for broad band binding of stacked packed products (26) with at least one tensionable band (18) of plastic, or a paper web (30) coated on at least one side with a plastic or lacquer (28),
characterised in that
the flat working surface (76) of the sonotrode (38) is divided by recesses (78, 80) into grid surfaces (84), where the recesses are formed as grooves running in two directions (78, 80) which run in the direction of the long sides of the working surface (76) and at an angle (α) of 30 - 60° to this direction.

7. Machine according to claim 6, characterised in that the grooves (78, 80) taper in the direction facing away from the working surface (76).

8. Machine according to claim 6 or 7, characterised in that the angled side surfaces (82) intersect at an angle (β) of 30 - 90°.

9. Machine according to any of claims 6 to 8, characterised in that the longitudinal (78) and transverse (80) grooves, preferably 0.5 to 1 mm deep, which have a spacing (l, c) of 1 - 3 mm, are formed at an angle (α) of preferably around 50°.

10. Machine according to any of claims 6 to 9, characterised in that the longitudinal grooves (78) have a spacing (l) of approximately 2 mm, the transverse grooves (80) have a spacing (c) of approximately 1.25 mm, the grooves (78, 80) have a depth (d) of approximately 0.75 mm, and the groove side surfaces intersect at an angle (β) of approximately 60°.

## Revendications

1. Procédé de liage, au moyen de larges bandes, de marchandises empilées (26) sur une machine (10) à appliquer les bandes à l'aide d'au moins une bande (18) de fermeture qui forme une boucle tendable et est constituée d'une feuille de papier continue poreuse (30) revêtue au moins sur l'un de ses côtés, boucle qui est sectionnée après le serrage et la jonction de la bande (18), la machine (10) à appliquer les bandes amenant l'une sur l'autre les deux extrémités de la bande (18) lors de la formation de la boucle et joignant l'extrémité libre à la bande (18) à l'aide d'une sonotrode, caractérisé en ce qu'une feuille continue de papier (30), revêtue au moins sur l'un de ses côtés d'une couche de matière plastique ou de laque (18) d'une épaisseur de 10 à 20 µm, sert de bande et en ce qu'une surface de travail (76) plate de la sonotrode (38), qui est divisée en surfaces (84) de réseau par des évidements (78, 80), est employée.

2. Procédé selon la revendication 1, caractérisé en ce qu'une sonotrode (38) de la machine (10) à appliquer les bandes fonctionne à une fréquence de 30 à 50 kHz, de préférence environ 40 kHz.

3. Procédé selon la revendication 1 ou 2, caractérisé par l'emploi d'une bande (18), revêtue d'un côté, dont la surface de papier (32) libre a été rendue rugueuse.

4. Procédé selon l'une des revendications 1 à 3, caractérisé par l'emploi d'une bande (18) comportant sur l'un des côtés ou sur les deux côtés une couche (28) de matière plastique en matière thermofusible ou thermoplastique, de préférence en polyéthylène ou en polypropylène.

5. Procédé selon l'une des revendications 1 à 4, caractérisé par l'emploi d'une bande (18) comportant au moins une couche de matière plastique (18) appliquée par pulvérisation, au moins appliquée comme couche de dispersion ou comme feuille.

6. Machine (10) à appliquer les bandes comportant une sonotrode (38) pour le liage de marchandises empilées (26) au moyen de larges bandes, à l'aide d'au moins une bande tendable (18) constituée de matière plastique ou d'une feuille continue de papier revêtue d'une matière plastique ou d'une laque (30) au moins sur l'une de ses faces, caractérisée en ce que la surface de travail (76) de la sonotrode (38) est divisée en surfaces (84) de réseau par des évidements (78, 80), les évidements étant réalisés sous la forme de rainures (78, 80) à tracés orientées dans deux directions, l'une étant parallèle à la direction des grands côtés de la surface de travail (76) et l'autre formant un angle (α) de 30 à 60° avec cette direction.

7. Machine selon la revendication 6, caractérisée en ce que les rainures (78, 80) se rétrécissent dans la direction qui s'éloigne de la surface de travail (76).

8. Machine selon la revendication 6 ou 7, caractérisée en ce que les surfaces latérales obliques (82) se coupent selon un angle (β) de 30 à 90°.

9. Machine selon l'une des revendications 6 à 8, caractérisée en ce que les rainures longitudinales (78) et transversales (80) d'une profondeur préférée de 0,5 à 1 mm, dont la distance mutuelle (1, c) est de 1 à 3 mm, sont réalisées selon un angle (α) d'environ 50°.

10. Machine selon l'une des revendications 6 à 9, caractérisée en ce que la distance (1) entre rainures longitudinales (78) est d'environ 2 mm, la distance (c) entre les rainures transversales (80) est d'environ 1,25 mm, la profondeur (d) des rainures (78, 80) est d'environ 0,75 mm, et l'angle d'intersection (β) des surfaces latérales (82) des rainures est d'environ 60°.
